# EUROPÄISCHE PATENTANMELDUNG

(11) **EP 2 610 825 A1**
(43) Veröffentlichungstag der Anmeldung: **03.07.2013**
(21) Anmeldenummer: 12199564.1
(22) Anmeldetag: 28.12.2012
(51) Int. Cl.: G07F 7/08, G07F 7/12, G06Q 20/34

(54) **Objektträger für Edelmetalle sowie Verfahren zum Authentifizieren des Objektträgers**

(30) Priorität: 30.12.2011 DE 102011122604
(71) Anmelder: Dyckhoff, Boris, 53347 Alfter (DE); Demirörs, Yavuz, 50733 Köln (DE)
(72) Erfinder: Dyckhoff, Boris, 53347 Alfter (DE); Demirörs, Yavuz, 50733 Köln (DE)
(74) Vertreter: Cohausz & Florack

(57) **Zusammenfassung**

Objektträger 2 umfassend zumindest ein ein vorbestimmtes Nenngewicht aufweisendes Teil 4 aus Edelmetall, und einen an dem Objektträger 2 fest angeordneten Chip 6 mit zumindest einem Mikroprozessor 6a und einem Speicher 6b. Zur Sicherstellung der Echtheit des Teils 4 wird vorgeschlagen, dass in dem Speicher 6b zumindest Informationen zu dem Nenngewicht sowie ein Authentifizierungsgeheimnis gespeichert sind, und dass der Mikroprozessor 6a mittels des Authentifizierungsgeheimnisses eine gesicherte Kommunikation mit einem netzbasierten Server ermöglicht ist.

## Beschreibung

Der Gegenstand betrifft einen Objektträger mit einen Edelmetall, ein System mit einem Objektträger und einem netzbasierten Server sowie ein Verfahren zum Authentifizieren eines Objektträgers.

Edelmetalle, vorzugsweise Gold, werden heutzutage nicht nur als Anlageobjekt verwendet, sondern dienen auch häufig als wertvolles Geschenk sowie als Sicherung des eigenen Vermögens gegenüber Inflation.

Aufgrund des hohen Wertes von Edelmetallen ist jedoch deren Echtheit von besonderer Relevanz. Insbesondere im geschäftlichen Verkehr, jedoch auch bei wertvollen Geschenken sollte sichergestellt sein, dass das mit diesen Geschenken verbundene Edelmetall echt ist.

Bekannt sind zum Beispiel Automaten, an denen Goldbarren in bestimmten Nenngewichten zusammen mit einem Echtheitszertifikat erworben werden können. Hierbei ist neben den Goldbarren auf einem Objektträger eine Seriennummer aufgedruckt.

Der Eigentümer eines solchen Objektträgers kann jedoch nicht gesichert feststellen lassen, ob die Seriennummer korrekt ist bzw. ob das Metall rein ist bzw. ob das Nenngewicht eingehalten wurde. Hierzu müsste der Eigentümer das Metallplättchen vom Objektträger lösen und dabei den Gegenstand zerstören. Auch kann er gegenüber Dritten nicht nachweisen, dass das auf dem Objektträger angeordnete Edelmetall zum Einen echt ist und zum Anderen das deklarierte Gewicht aufweist.

Somit unterliegen bekannte Objektträger mit Edelmetallen großer Gefahr des Betrugs und Fälschung.

Aus diesem Grunde liegt dem Gegenstand die Aufgabe zugrunde, einen Objektträger mit einem Edelmetall zur Verfügung zu stellen, welcher gegenüber Fälschungen und Betrug gesichert sein kann.

Diese Aufgabe wird durch ein Objektträger nach Anspruch 1, ein System nach Anspruch 12 sowie ein Verfahren nach Anspruch 15 gelöst.

Es wird vorgeschlagen, an dem Objektträger zumindest ein Teil aus Edelmetall anzuordnen. Das Teil aus Edelmetall hat dabei ein vorbestimmtes Nenngewicht, mit welchem der Wert des Teils definiert ist.

Ferner ist vorgeschlagen, dass zusammen mit dem an dem Objektträger angeordneten Teil zumindest ein Chip fest an dem Objektträger angeordnet ist. Der Chip weist dabei zumindest ein Mikroprozessor und ein Speicher auf. Somit wird gegenständlich ein Objektträger mit einem Edelmetallteil und einem Chip vorgeschlagen.

Zur Sicherung des Objektträgers gegenüber Manipulation und zur Gewährleistung einer gesicherten Informationen über den Wert des Teils wird vorgeschlagen, dass in dem Speicher zumindest Informationen zu dem Nenngewicht sowie ein Authentifizierungsgeheimnis gespeichert sind. Das Nenngewicht ermöglicht einen Rückschluss auf den Wert des Teils abhängig von der aktuellen Notierung des Edelmetalls. Mit Hilfe des Authentifizierungsgeheimnisses lässt sich eine Kommunikation mit einem netzseitigen Server sichern. Aus diesem Grunde wird ferner vorgeschlagen, dass mittels des Mikroprozessors und des Authentifizierungsgeheimnisses eine gesicherte Kommunikation mit einem netzbasierten Server ermöglicht ist.

Eine Kommunikation mit einem Server kann insbesondere dann leicht erfolgen, wenn auf dem Speicher eine Serveradresse gespeichert ist. Damit ist es möglich, ohne eine Nutzereingabe einen Server zu erreichen. Dies schließt auch eine Fehleingabe einer Serveradresse oder eine bewusste Manipulation einer Serveradresse aus. Insbesondere kann die Serveradresse unveränderlich auf dem Speicher gespeichert sein.

Das Authentifizierungsgeheimnis kann zumindest einen privaten Schlüssel, vorzugsweise zusätzlich einen öffentlichen Schlüssel enthalten. Ein Schlüssel ist eine Bitfolge zur Erstellung von Signaturen und zum Verschlüsseln von Informationen.

Mit Hilfe des Authentifizierungsgeheimnisses ist es zum Einen möglich, Informationen zu dem Teil, insbesondere Informationen über das Nenngewicht jedoch auch andere Informationen zu dem Teil, beispielsweise eine Seriennummer, elektronisch zu signieren. Mit Hilfe der Signatur ist es netzseitig möglich, zu überprüfen, ob die empfangene Information tatsächlich vom korrekten Sender stammt. Andererseits ist es mit Hilfe des Authentifizierungsgeheimnisses möglich, eine Kommunikation zwischen dem Objektträger bzw. dem auf dem Objektträger fest angeordneten Chip und einem netzseitigen Server zu verschlüsseln.

Bei einer Signatur wird vorzugsweise ein privater Schlüssel des Authentifizierungsgeheimnisses verwendet. Dieser private Schlüssel ist eineindeutig dem Objektträger bzw. dem Chip zugeordnet. Bei der Verschlüsselung wird vorzugsweise ein öffentlicher Schlüssel des netzseitigen Servers verwendet.

Mit dem gegenständlichen Objektträger ist es somit möglich, das Teil gegenüber einem netzbasierten Server zu authentifizieren. Auf Seiten des Servers ist somit eine Sicherstellung möglich, dass eine Kommunikation von einem bestimmten Objektträger bzw. einem bestimmten Teil stammt und im Anschluss daran ist es möglich, die Authentizität des Teils gegenüber Dritten zu bestätigen.

Wenn nun der Server von einer vertrauenswürdigen Stelle betrieben wird, kann die Betrugsmöglichkeit mit dem Objektträger stark eingeschränkt werden. Empfänger des Objektträgers können mit dem Objektträger selbst die Authentizität des Teils überprüfen. Solange der private Schlüssel des Authentifizierungsgeheimnisses nicht auslesbar in dem Speicher gespeichert ist, ist es nahezu unmöglich, die Authentizität des Objektträgers zu manipulieren.

Gemäß einem Ausführungsbeispiel wird vorgeschlagen, dass das Teil verliersicher an dem Objektträger angeordnet ist. Hierbei ist insbesondere ein Laminieren oder Verkleben des Teils an dem Objektträger geeignet. Vorzugsweise ist das Teil derart verliersicher an dem Objektträger angeordnet, dass es nicht zerstörungsfrei von dem Objektträger gelöst werden kann.

Auch wird vorgeschlagen, dass das Teil in dem Objektträger angeordnet ist. Hierzu können Aussparungen oder Öffnungen in den Objektträger geprägt oder gestanzt sein, in die dann das Teil eingesetzt wird. Auch kann das Teil darin verklebt werden.

Schließlich ist es möglich, dass das Teil selber den Objektträger bildet. In diesem Fall ist es lediglich notwendig, den Chip gegenüber dem Teil elektrisch zu isolieren, um die Funktion des Chips aufrecht zu erhalten.

Das Teil hat vorzugsweise definierte Formen, beispielsweise rechteckig, quadratisch, dreieckig, kreisförmig, vieleckig oder dergleichen.

Gemäß einem vorteilhaften Ausführungsbeispiel wird vorgeschlagen, dass Objektträger mit Teilen unterschiedlicher Nenngewichte verfügbar gemacht werden. Die Nenngewichte sind dabei vorzugsweise gestaffelt in 0,1g, 0,2g, 0,5g, 1,0g, 2,0g, 5,0g, 10,0g, 20,0g, 31,1g, 50,0g, 100,0g. Mit dieser Stückelung ist es möglich, verschiedenste Werte mit Hilfe verschiedener Objektträger abzubilden. Die Stückelung ist vorzugsweise an eine Münzstückelung angelehnt.

Vorzugsweise ist das Teil aus Gold, Silber, Palladium oder Platin sowie Legierungen davon gebildet. Dabei hat das Teil vorzugsweise eine Reinheit von 99%, besonders bevorzugt von 99,9%.

Wie bereits eingangs erläutert, kann der Objektträger kartenförmig sein. Hierbei ist bevorzugt, wenn der Objektträger mit einer Dicke zwischen 0,1 und 1mm gebildet ist. Vorzugsweise ist, wenn das Teil den Objektträger selbst bildet, das Teil ein Blech ist und eine Dicke zwischen 0,1 und 1mm, vorzugsweise zwischen 0,40 und 0,70mm hat. Es ist jedoch auch bevorzugt, wenn der Objektträger ein Werbemittel ist, wie beispielsweise ein Kugelschreiber, eine Uhr, ein Kalender, ein Feuerzeug, ein Schlüsselanhänger, ein Speicher-Stick und USB-Stick, ein Etui, ein Fotorahmen oder dergleichen. In diesem Fall kann das Werbemittel mit dem werthaltigen Teil ausgestattet sein, dessen Nenngewicht und Echtheit mittels des Authentifizierungsgeheimnisses mit Hilfe eines netzseitigen Servers bestätigt werden kann.

Um eine optische Überprüfung der Echtheit des Teils zu ermöglichen, wird vorgeschlagen, dass auf dem Teil zumindest eine Seriennummer und/oder ein individualisiertes Signet graviert oder geprägt ist.

Das Auslesen des Chips soll mit herkömmlichen Lesegeräten möglich sein. Ferner soll der Objektträger möglichst handlich sein und beispielsweise in Geldbörsen transportiert werden können. Aus diesem Grunde wird vorgeschlagen, dass der Chip oder der Objektträger eine Abmessung ID-1, ID-00 oder ID-000 gemäß ISO 7816 aufweist. Andererseits ist es auch möglich, dass die Abmessung des Chips und/oder des Objektträgers gemäß Mini-UICC oder VISA-Mini ist. Besonders einfach ist eine Abmessung des Objektträgers gemäß ID-1 bei gleichzeitiger Abmessung des Chips gemäß ID-000. Dann lässt sich der Objektträger mittels herkömmlicher Kartenlesegeräte in besonders einfacher Weise auslesen.

Der Chip kann sowohl eine kontaktbehaftete als auch eine kontaktlose Kommunikation unterstützen. Die kontaktlose Kommunikation kann vorzugsweise mittels RFID, Bluetooth, Nahfunk, WLAN oder dergleichen erfolgen.

Für die Überprüfung der Authentizität und die Bestimmung des Wertes des Teils wird vorgeschlagen, dass in dem Speicher zusätzlich zum Nenngewicht zumindest Informationen umfassend die Legierung und/oder Reinheit der Legierung des Teils, Herkunft des Teils, Seriennummer des Teils, Seriennummer des Objektträgers, privater Schlüssel des Authentifizierungsgeheimnisses, öffentlicher Schlüssel des Authentifizierungsgeheimnisses, öffentlicher Schlüssel des Servers, Eigentümer des Teils und/oder Herausgeber des Teils gespeichert sind.

Mit Hilfe der Informationen zur Legierung und der Herkunft des Teils lässt sich eine Aussage über das Material des Teils machen. Mit Hilfe der Seriennummer des Teils kann dessen Echtheit überprüft werden. Mit Hilfe der Seriennummer des Objektträgers beispielsweise in Kombination mit der Seriennummer des Teils kann überprüft werden, ob das Teil an dem ursprünglichen Objektträger haftet oder von dem ursprünglichen Objektträger entfernt wurde. Mit Hilfe des Authentifizierungsgeheimnisses, insbesondere des privaten als auch des öffentlichen Schlüssels, ist es möglich, Kommunikation mit einem Server zu verschlüsseln und Informationen in dem Speicher zu signieren.

Auch wird vorgeschlagen, dass die genannten Informationen sowohl unverschlüsselt als auch verschlüsselt in dem Speicher abgelegt sind. Auch ist es möglich, dass Signaturen zu den genannten Informationen bereits zum Herstellungszeitpunkt des Objektträgers erstellt werden und zusammen mit den Informationen selber in dem Speicher abgelegt werden. Dann müssen diese Signaturen nicht mehr in dem Chip errechnet werden. Außerdem ist es dann nicht mehr notwendig, den privaten Schlüssel des Authentifizierungsgeheimnisses zu speichern. Dies erhöht die Sicherheit gegenüber Manipulationen, da dann der private Schlüssel auf keinem Fall ausgelesen werden kann.

Mit Hilfe des öffentlichen Schlüssels des Servers ist es möglich, eine Kommunikation mit dem Server zu verschlüsseln. Auch ist es mit Hilfe des öffentlichen Schlüssel des Servers möglich, Signaturen die von dem Server stammen auf Echtheit zu überprüfen.

Die Information zum Eigentümer als auch zum Herausgeber des Teils können dynamisch in dem Speicher abgelegt sein. Bei einem Eigentümerwechsel kann es möglich sein, diese Informationen aktualisiert in dem Speicher abzulegen.

Vorzugsweise sind Gruppen von Informationen gebildet. Diese Gruppen können in unterschiedlichen Speicherbereichen gespeichert sein. Vorzugsweise ist eine Gruppe eine Information zu dem Teil. Eine weitere Gruppe ist eine Information zu dem Objektträger und eine dritte Gruppe kann eine Information zu dem Eigentümer sein. Insbesondere die dritte Gruppe kann verschlüsselt gespeichert sein, so dass Eigentümerinformationen nur unter Verwendung eines Passwortes oder anderer Authentifizierungsverfahren, z.B. biometrische Verfahren, ausgelesen werden können. Hierdurch lässt sich eine Personalisierung passwortgesichert realisieren.

Zur Authentifizierung der in dem Speicher gespeicherten Informationen ist es möglich, dass der Mikroprozessor zumindest eine Information aus dem Speicher mittels eines privaten Schlüssels, vorzugsweise des Authentifizierungsgeheimnisses, signiert. Vorzugsweise kann die Seriennummer des Objektträgers zusammen mit der Seriennummer des Teils signiert werden. Die beiden Seriennummern können dann im Klartext zusammen mit den entsprechenden Signaturen an einen Server übermittelt werden. Serverseitig kann mit Hilfe des öffentlichen Schlüssels des Objektträgers bzw. des Teils die Echtheit der Signatur überprüft werden. Wenn nun der private Schlüssel als auch der öffentliche Schlüssel von einem Trustcenter herausgegeben wurden, kann sichergestellt sein, dass serverseitig die Authentizität des Teils bzw. des Objektträgers verifizierbar ist.

Ein weiterer Gegenstand ist ein System mit einem Objektträger nach Anspruch 1 und einem zuvor beschriebenen netzbasierten Server. Hierbei wird vorgeschlagen, dass der Server zumindest teilweise die Information speichert, die auch in dem Speicher des Chips gespeichert sind. Hierdurch lässt sich ein Abgleich der auf dem Speicher des Chips gespeicherten Informationen mit den netzseitigen Informationen realisieren.

Wie bereits zuvor erläutert, kann netzseitig in einem Server eine signierte Information empfangen werden und diese Signatur kann netzseitig überprüft werden. Bei einer positiven Überprüfung kann eine Bestätigungsinformation bereitgestellt werden. Dies ist beispielsweise über eine Internetschnittstelle, beispielsweise eine Webseite möglich. Auch kann mittels einer Mobilfunknachricht oder mittels einer vorzugsweise mobiler Applikation eine Bestätigungsinformation empfangen oder übermittelt werden. Auch ist es möglich, dass die Bestätigungsinformation wiederum signiert mit dem privaten Schlüssel des Servers an den Objektträger übermittelt wird. Dort kann mit Hilfe des öffentlichen Schlüssels des Servers die Signatur auf Echtzeit überprüft werden und somit sichergestellt werden, dass die Bestätigungsinformation tatsächlich vom hierzu autorisierten Server stammt.

Ein weiterer Gegenstand ist ein Verfahren zum Authentifizieren eines Objektträgers nach Anspruch 1 umfassend objektträgerseitiges Auslesen einer Seriennummer des Teils aus dem Speicher, objektträgerseitiges Signieren der ausgelesenen Seriennummer, objektträgerseitiges Übermitteln zumindest der signierten Seriennummer an einen netzbasierten Server, serverseitiges Empfangen der signierten Seriennummer, Serverseitiges Authentifizieren der Seriennummer durch Überprüfung der Signatur, serverseitiges Bereitstellen einer Authentizitätsinformation im Anschluss an einer positiven Überprüfung der Signatur. Die Authentizitätsinformation kann die Bestätigungsinformation sein. Andere Informationen können ebenfalls enthalten sein.

Nachfolgend wird der Gegenstand anhand einer Ausführungsbeispiele zeigenden Zeichnung näher erläutert. In der Zeichnung zeigen:
- Fig. 1: einen Objektträger gemäß einem ersten Ausführungsbeispiel;
- Fig. 2: den Aufbau eines Chips gemäß einem Ausführungsbeispiel;
- Fig. 3: einen weiteren Objektträger gemäß einem Ausführungsbeispiel;
- Fig. 4: ein System zur Überprüfung eines Objektträgers gemäß einem Ausführungsbeispiel;
- Fig. 5: eine Datenstruktur einer signierten Information;
- Fig. 6: einen Aufbau eines Speichers in einem Chip gemäß einem Ausführungsbeispiel.

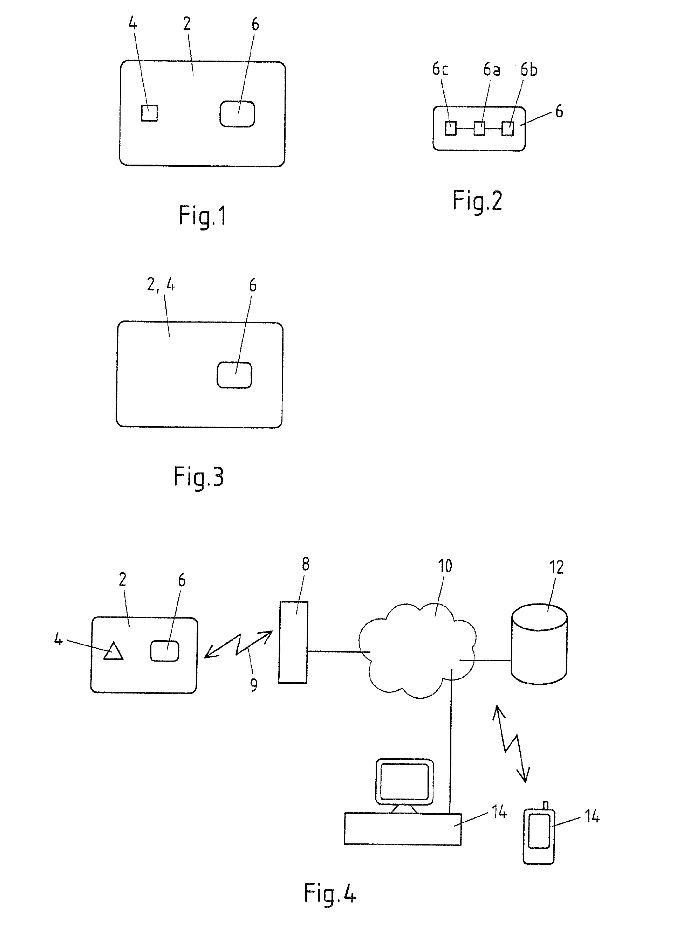

Fig. 1 zeigt einen Objektträger 2. Der Objektträger 2 ist vorzugsweise kartenförmig und beispielsweise aus Kunststoff hergestellt. Vorzugsweise hat der Objektträger 2 eine Form gemäß ISO 7816 ID-1. Auf dem Objektträger 2 ist ein Teil 4 angeordnet. Das Teil 4 ist vorzugsweise aus Gold, Silber, Palladium oder Platin. Vorzugsweise hat das Teil 4 eine Reinheit von 99,9. Das Teil 4 ist entweder auf den Objektträger 2 laminiert oder mit diesem verklebt. Auch ist es möglich, dass das Teil 4 in einer Aussparung in dem Objektträger 2 angeordnet ist. Die Aussparung kann aus dem Objektträger 2 gestanzt sein oder in den Objektträger 2 geprägt sein. Das Teil 4 ist in der gezeigten Darstellung quadratisch und hat ein Gewicht von 0,2g. Vorzugsweise gibt es verschiedene Objektträger 2 mit unterschiedlichen Gewichtsklassen von Teilen 4, so dass eine Stückelung von unterschiedlichen Werten möglich ist.

Auf dem Objektträger 2 ist ferner ein Chip 6 angeordnet, der eine Authentifizierung des Teils 4 bzw. des Objektträgers 2 ermöglicht.

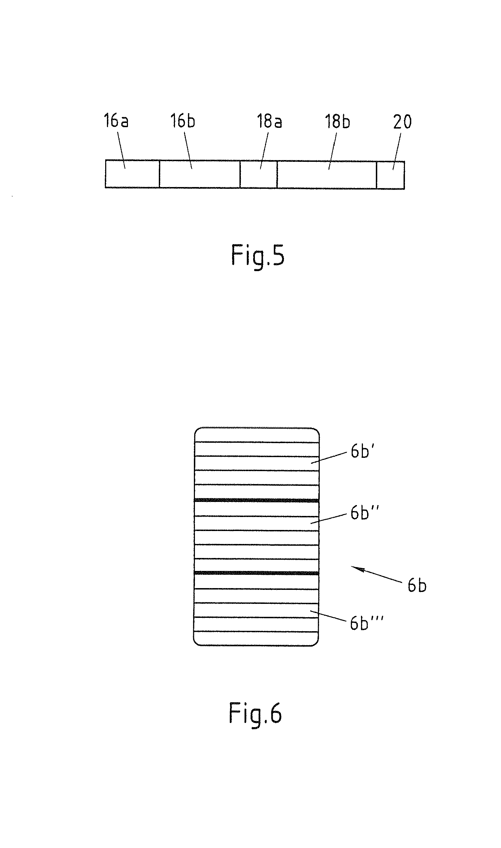

Der Aufbau des Chips 6 ist beispielhaft in der Fig. 2 schematisch dargestellt. In dem Chip 6 ist ein Mikroprozessor 6a sowie ein Speicher 6b und eine Kommunikationsschnittstelle 6c angeordnet. In dem Speicher 6b sind Informationen abgelegt. Die Speicherorganisation des Speichers 6b ist beispielsweise in der Fig. 6 gezeigt.

Fig. 6 zeigt eine mögliche Organisation des Speichers 6b in dem Chip 6. Der Speicher 6b ist dabei in verschiedene Speicherbereiche 6b', 6b" und 6b"' aufgeteilt. Jeder der Speicherbereiche 6b', 6b" und 6b'" kann für jeweils eine Gruppe von Informationen verwendet werden. Eine erste Gruppe von Informationen kann in einem Speicherbereich 6b' abgelegt sein. Diese Informationen können beispielsweise Informationen sein, die sich auf das Teil 4 beziehen. Das kann zum Einen eine Seriennummer des Teils 4 sein. Auch ist es möglich, dass eine Herkunft des Teils 4 in dem Speicher 6b' abgelegt ist. Ferner kann eine Information darüber angelegt sein, wo und wie bzw. mit welchen Mitteln das Teil 4 bzw. das Material des Teils 4 gewonnen wurde, um beispielsweise die Nachhaltigkeit und den fairen Handel Material des Teil 4 ist nachzuweisen. Ferner kann das Nenngewicht, die Materialbezeichnung, die Legierung, die Reinheit oder dergleichen in dem Speicherbereich 6b' abgelegt sein.

In dem Speicherbereich 6b" können Informationen zu dem Objektträger 2 abgespeichert sein. Dies kann beispielsweise die Seriennummer des Objektträgers 2 sein. Auch ist es möglich, dass die Art des Objektträgers 2, dessen Form, ein darauf angebrachtes Motiv und dergleichen abgespeichert sein können. Die Speicherbereiche 6b' und 6b" sind vorzugsweise unverschlüsselt und auslesbar.

Der Speicherbereich 6b"' ist vorzugsweise verschlüsselt und durch ein Passwort geschützt abfragbar. In diesem Speicherbereich 6b"' können beispielsweise dynamisch Informationen zur Inhaberschaft, zur Historie, zu Ablageorten und dergleichen abgelegt sein. Beispielsweise ist es möglich, dass der aktuelle Eigentümer als auch eine Anzahl der vorhergehenden Eigentümer gespeichert ist. Auch kann gespeichert sein, an welchen Orten sich der Objektträger 2 befunden hat. Schließlich kann eine Depotinformation oder eine Schließfachinformation, über das Depot bzw. das Schließfach in dem der Objektträger 2 abgelegt ist, in dem Speicherbereich 6b"' gespeichert sein. Die Informationen in dem Speicherbereich 6b"' können dynamisch verändert werden, wobei einer Veränderung vorzugsweise jedoch ausschließlich über den Server über eine gesicherte Kommunikation möglich sein soll.

Fig. 3 zeigt ein weiteres Ausführungsbeispiel, bei dem der Objektträger 2 das Teil 4 selbst ist. In diesem Fall ist der Objektträger 2 als dünnes Blech mit einer Stärke zwischen 0,1 und 1mm gebildet. Je nach Gewichtsklasse kann entweder die Blechdicke oder Länge bzw. Breite des Objektträgers 2 variiert werden. In einem elektrisch isolierten Bereich kann der Chip 6 auf dem Objektträger 2 verliersicher angeordnet sein.

Ein System zur Überprüfung der Authentizität des Teils 2 ist in der Fig. 4 dargestellt. Dargestellt ist der Objektträger 2, auf dem ein dreieckförmiges Teil 4 samt Chip 6 angeordnet ist. Ferner ist ein Lesegerät 8 dargestellt, welches über ein Weitverkehrsnetz 10, beispielsweise das Internet, mit einem Server 12 verbunden sein kann. Schließlich ist ein Heimcomputer 14, der aber auch ein Smartphone oder dergleichen sein kann, dargestellt, der ebenfalls mit dem Weitverkehrsnetz 10 verbunden ist.

Zur Überprüfung der Authentizität des Objektträgers 2 bzw. des Teils 4 der Objektträger 2 wird dieser dem Kartenleser zugeführt. Der Kartenleser 8 kann ein kontaktloser RFID Kartenleser sein.

Das Lesegerät 8 kann ein mobiles Lesegerät, ein Kartenleser, ein Smartphone, ein RFID Transceiver oder dergleichen sein. Insbesondere kann ein Smartphone mittels Nahfunk die Daten des Chips auslesen. Auch kann parallel dazu z.B. mit einer Kamera eines Smartphones eine Graphik oder ein Signet oder ein 2d Barcode von dem Objektträger gelesen werden. Diese Information kann zusammen mit den Informationen von dem Chip zu Authentizitätsprüfung an den Server übermittelt werden. Insbesondere wenn auf dem Objektträger ein 2D Barcode oder eine Graphik aufgedruckt ist, die entsprechende Information auch auf dem Chip gespeichert ist und bei einer Authentizitätsprüfung die optische Information mit der Information von dem Chip abgeglichen wird, kann die Sicherheit erhöht werden. Auch kann in einem 2D Barcode eine Serveradresse codiert sein, so dass durch Auslesen des Barcodes eine automatische Verbindung mit dem Server hergestellt werden kann, der die Authentizitätsprüfung durchführt.

Über die Funkstrecke 9 kann eine Kommunikation zwischen dem Chip 6 bzw. der Kommunikationsschnittstelle 6c und dem Kartenleser 8 etabliert werden. Zur Authentizitätsprüfung wird in dem Chip 6 eine Signatur der Seriennummer des Teils 4 erstellt. Darüber hinaus wird eine Signatur der Seriennummer des Objektträgers 2 erstellt. Dies kann unter Verwendung eines Hash-Wertes und der jeweiligen privaten Schlüssel nach gängigen Verfahren erfolgen. Der so gewonnene Datensatz ist beispielsweise in Fig. 5 dargestellt.

Fig. 5 zeigt einen Datensatz mit einer Signatur 16a und einer Seriennummer 16b des Teils 4. Ferner ist in dem Datensatz eine Signatur 18a einer Seriennummer 18b des Objektträgers 2 abgespeichert. Schließlich ist in dem Datensatz eine Anzahl an Fehlerkorrekturbits 20 abgespeichert. Die Signaturen 16a und 16b werden vorzugsweise mit dem privaten Schlüssel des Authentifizierungsgeheimnisses erstellt. Signaturverfahren wie PKCS können dabei eingesetzt werden.

Der in Fig. 5 dargestellte Datensatz wird über die Funkstrecke 9 an den Kartenleser 8 übermittelt. Über das Weitverkehrsnetz 10 wird der Datensatz dann an den zentralen Datenserver 12 übermittelt. Serverseitig kann mit Hilfe der empfangenen Seriennummern 16b und 18b eine Vergleichshashwert errechnet werden. Anhand eines serverseitig gespeicherten öffentlichen Schlüssels des Authentifizierungsgeheimnisses kann aus den empfangenen Signaturen 18a und 18b der ursprüngliche Hashwert errechnet werden. Stimmen Vergleichshashwert und errechneter ursprünglicher Hashwert überein, so kann die Echtheit der Seriennummer bestätigt werden.

Bei einer positiven Überprüfung kann der Server 12 beispielsweise über eine SSL gesicherte Kommunikation an den Heimcomputer 14 über eine Webseite eine Bestätigungsinformation senden. Somit kann ein Nutzer überprüfen, ob das Teil 4 auf dem Objektträger 2 tatsächlich den Wert hat, der genannt wurde. Ferner kann eine Eigentumsinformation überprüft werden, als auch eine Information über das verwendete Material und dessen Herkunft. Eigentümerwechsel können durch Passworteingabe oder sonstige biometrische oder andere Authentifizierungsverfahren an dem Heimcomputer 14 über den Server 12 zurück in den Chip gespielt werden, so dass der Speicherbereich 6b"' dynamisch veränderlich ist.

## Patentansprüche

1. Objektträger (2)umfassend:
- zumindest ein ein vorbestimmtes Nenngewicht aufweisendes Teil (4) aus Edelmetall, und
- einen an dem Objektträger (2) fest angeordneten Chip (6) mit zumindest einem Mikroprozessor (6a) und einem Speicher (6b),
**dadurch gekennzeichnet,**
- **dass** in dem Speicher (6b) zumindest Informationen zu dem Nenngewicht sowie ein Authentifizierungsgeheimnis gespeichert sind, und
- **dass** der Mikroprozessor (6a) mittels des Authentifizierungsgeheimnisses zumindest den Objektträger (2) und/oder das Teil (4) gegenüber einem netzbasierten Server (12) authentifiziert.

2. Objektträger nach Anspruch 1, **dadurch gekennzeichnet, dass** das Teil (4) verliersicher an dem Objektträger (2) angeordnet ist, insbesondere mittels Laminieren oder Kleben, oder dass das Teil in dem Objektträger (2) angeordnet ist, insbesondere in einer Aussparung in dem Objektträger (2), oder dass das Teil (4) den Objektträger (2) bildend gebildet ist.

3. Objektträger nach Anspruch 1 oder 2, **dadurch gekennzeichnet, dass** das Nenngewicht ein Gewicht aus der Gruppe:
A) 0,1 g
B) 0,2 g
C) 0,5 g
D) 1,0 g
E) 2,0 g
F) 5,0 g
G) 10,0 g
H) 20,0 g
I) 31,1 g
J) 50,0 g
K) 100,0 g
ist

4. Objektträger nach einem der vorangehenden Ansprüche, **dadurch gekennzeichnet, dass** das Teil (4) aus einem Edelmetall oder Legierungen davon aus der Gruppe:
A) Gold,
B) Silber,
C) Platin,
insbesondere mit einer Reinheit von über 99%, vorzugsweise von 99,9% ist.

5. Objektträger nach einem der vorangehenden Ansprüche, **dadurch gekennzeichnet, dass** er kartenförmig, insbesondere aus einem Blech mit einer Dicke zwischen 0,1 mm und 1 mm, vorzugsweise zwischen 0,40 mm und 0,70 mm, gebildet ist oder das er als Schreibgerät, Füller, Kugelschreiber, Buch, DVD, BluRay, CD, Uhr, Kalender, Feuerzeug, Schlüsselanhänger, Speicher-Stick, USB-Stick, Etuis, Fotorahmen, Tasse gebildet ist.

6. Objektträger nach einem der vorangehenden Ansprüche, **dadurch gekennzeichnet, dass** auf dem Teil (4) zumindest eine Seriennummer und/oder ein individualisiertes Signet graviert oder geprägt ist.

7. Objektträger nach einem der vorangehenden Ansprüche, **dadurch gekennzeichnet, dass** die Abmessungen des Chips (6) und/oder des Objektträgers (2) eine der Größen
A) ID-1
B) ID-00
C) ID-000
nach ISO 7816 oder Mini-UICC oder Visa-Mini aufweist, insbesondere das der Chip (6) die Abmessung ID-000 und der Objektträger (2) die Abmessung ID-1 aufweist.

8. Objektträger nach einem der vorangehenden Ansprüche, **dadurch gekennzeichnet, dass** der Chip (6) zur kontaktbehafteten oder kontaktlosen Kommunikation eingerichtet ist.

9. Objektträger nach einem der vorangehenden Ansprüche, **dadurch gekennzeichnet, dass** in dem Speicher (6b) Informationen umfassend zumindest:
A) Legierung und/oder Reinheit der Legierung des Teils;
B) Herkunft des Teils;
C) Seriennummer des Teils;
D) Seriennummer des Objektträgers;
E) privater Schlüssel des Authentifizierungsgeheimnisses;
F) öffentlicher Schlüssel des Authentifizierungsgeheimnisses;
G) öffentlicher Schlüssel des Servers;
H) Eigentümer des Teils;
I) Herausgeber des Teils;
J) Art des Objektträgers;
K) Signet und/oder Text des Objektträgers;
gespeichert sind.

10. Objektträger nach einem der vorangehenden Ansprüche, **dadurch gekennzeichnet, dass** die in dem Speicher (6b) gespeicherten Informationen in Gruppen Informationen zu dem Teil, Informationen zu dem Objektträger und/oder Informationen zu dem Eigentümer gruppiert sind wobei insbesondere die Informationen zu dem Teil und dem Objektträger unverschlüsselt gespeichert sind und die Informationen zu dem Eigentümer verschlüsselt gespeichert sind.

11. Objektträger nach einem der vorangehenden Ansprüche, **dadurch gekennzeichnet, dass** der Mikroprozessor (6a) zumindest eine Information aus dem Speicher (6b), insbesondere mit dem privaten Schlüssel des Authentifizierungsgeheimnisses, signiert.

12. System mit einem Objektträger (2) nach Anspruch 1 und einem netzbasierten Server (12).

13. System nach Anspruch 12, **dadurch gekennzeichnet, dass** auf dem netzbasierten Server (12) die Informationen aus dem Speicher (6b) zumindest teilweise ebenfalls gespeichert sind.

14. System nach Anspruch 12 oder 13, **dadurch gekennzeichnet, dass** der netzbasierte Server (12) eine signierte Information empfängt, dass der netzbasierte Server (12) die Signatur der Information mit dem öffentlichen Schlüssel des Teils verifiziert und dass der netzbasierte Server (12) Bestätigungsinformationen zu den signierten Informationen bereitstellt.

15. Verfahren zum Authentifizieren eines Objektträgers nach Anspruch 1 umfassend:
- objektträgerseitiges Auslesen einer Seriennummer des Teils (4) aus dem Speicher (6b),
- objektträgerseitiges Signieren der ausgelesenen Seriennummer,
- objektträgerseitiges Übermitteln zumindest der signierten Seriennummer an einen netzbasierten Server (12),
- serverseitiges Empfangen der signierten Seriennummer,
- serverseitiges authentifizieren der Seriennummer durch Überprüfen des Signatur,
- serverseitiges Bereitstellen einer Authentizitätsinformation im Anschluss an eine positive Überprüfung der Signatur.
